# EUROPEAN PATENT APPLICATION

(11) **EP 0 856 619 A2**
(43) Date of publication of application: **05.08.1998**
(21) Application number: 98660006.2
(22) Date of filing: 30.01.1998
(51) Int. Cl.: E04F 15/022

(54) **Laminated parquet element**

(30) Priority: 31.01.1997 FI 970405
(71) Applicant: AHO, Jyrki, SF-02200 Espoo (FI); CASSERLY, Jutta, SF-08350 Routio (FI)
(72) Inventor: Aho, Yrjö, 02160 Espoo (FI)
(74) Representative: LEITZINGER OY

(57) **Abstract**

The invention relates to a laminated parquet element, comprising at least three distinct layers (3, 4, 5), one being a base layer (4) and another a wooden surface layer (3) which is bonded to the base layer by an adhesive joint (6). The adhesive joint (6) is reinforced with a meshed aluminium plate (1). The meshed aluminium plate has a function of bracing the element and improving its dimensional stability.

## Description

The present invention relates to a laminated parquet element, comprising at least three distinct layers, one being a base layer and another a wooden surface layer which is bonded to the base layer by an adhesive joint.

It is prior known that the reinforcement and improvement of dimensional stability of laminated wooden products, such as outer doors, can be achieved by using e.g. an 0,5 mm thick aluminium plate bonded on either side of the door underneath the surface material. The resulting sandwich structure braces the door against warping and prevents its depression to the shape of a skewed parallelogram. At the same time, the aluminium plate protects the wood from moisture variations and, being tightly bonded, restrains the wood from swelling and contraction caused by moisture variations.

However, the manufacturing of currently available products involves drawbacks as follows:
1. An aluminium plate is difficult to bond
2. The plate must be pretreated
3. Best possible reaction adhesives are required
4. The high price of aluminium sheet and difficult bonding operations make the use expensive.

In order to overcome the above drawbacks, the German published application DE-2,217,994 proposes a laminated timber plate intended for building a shuttering, wherein the sandwich-bonding adhesive joint is fitted with a reinforcing mesh constituted by steel wires or glass fibers. In terms of its structure and chosen material, the mesh is suitable for building parquet elements as the mesh is not a smooth, thin plate, nor is steel readily workable when cutting the elements to precise dimensions. On the other hand, fiberglass does not possess a sufficient strength (module of elasticity) when employed in the form of a wide-spaced mesh.

An object of the invention is to provide a parquet element, wherein the strains, both warping and lengthwise dimensional changes, caused by moisture variations, are effectively eliminated without significantly increasing the weight, thickness or price of the element.

According to the invention, the bracing and improvement of dimensional stability of a parquet element is achieved in such a manner that at least the adhesive joint between a wooden surface layer and a base layer is reinforced with a meshed aluminium sheet. The characterizing features of the invention are set forth in the appended claim 1. The characterizing features of preferred embodiments are set forth in the non-independent claims.

The invention will now be described by way of exemplary embodiments with reference made to the accompanying drawings, in which
- fig. 1: shows a parquet structure of the invention in section;
- fig. 2: shows a meshed plate used in a product of the invention;
- fig. 3: shows a parquet element in a plan view and illustrates implements for joining the elements to each other.
- Fig. 4: shows a second embodiment for a parquet element of the invention in section and
- fig. 5: shows a third embodiment for a parquet element of the invention in section.

A meshed aluminium plate 1 used in products of the invention can be manufactured e.g. as follows. An aluminium strip, having a thickness of 0,5 mm and a width of 1 m, is cut and stretched into a meshed plate with a 1 mm feed and a 20 mm spacing, followed by rolling it to a thickness of 0,4 mm for a flat plate. Thus, the meshed plate has a weight per square meter which is about 1/5 of the original weight of the plate. The module of elasticity of aluminium is 6-9 times higher than that of wood. The amount of aluminium required in the mesh is determined by the magnitude of stresses developed in a particular application. With respect to a solid plate, the meshed plate offers a major advantage in being easy to bond. The meshed plate need not be necessarily pretreated, it is sufficient to just make sure that the meshed plate is free of oil. The required sizing properties of an adhesive used for bonding the layers of a product will be essentially different. In this case, the adhesive must be capable of bonding effectively the surface and base of a product, the surface at least being made of a wood. The meshed plate 1 will be entirely enclosed by the adhesive and that restrains the movements of an adhesive joint and the layers bonded therewith in the direction of the plane of the joint. At the same time, this eliminates the demand for two difficult adhesive joints (metal/wood), which are replaced by a single adhesive joint containing an aluminium bracing.

In order to improve the bond, especially if the surface area of aluminium is large with respect to that of mesh apertures, the surface of the meshed aluminium plate is preferably etched. It can be performed easily with a nontoxic ferri/ferro oxidation system in a H₂SO₄-solution by immersing a roll of mesh in an oxidizing bath.

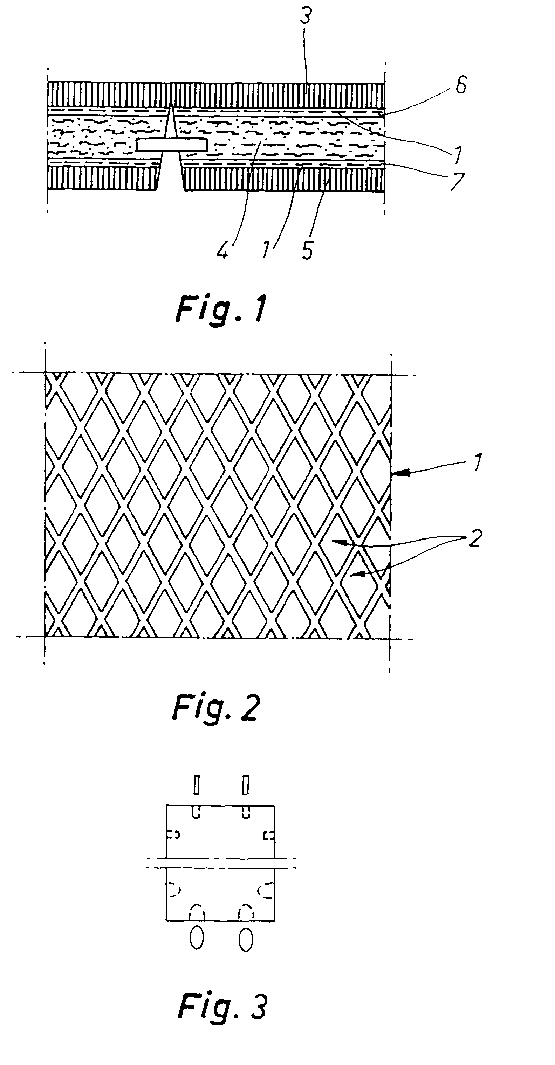

In the embodiments of figs. 1, 4, and 5, the parquet has its wooden surface layer 3 bonded to a base layer 4 with an adhesive joint 6, the meshed plate 1 fitted between the layers 3 and 4 having its mesh apertures 2 filled thereby. The base layer 4 can be made of wood fiber board (e.g. MDF-or chipboard), plywood, fiber-reinforced mineral boards, or thermosetting foam plastic, e.g. urethane foam plastic with a density of 60-100 kg/m³. The wooden surface layer 3 may be a conventional parquet surface, with wood grains extending horizontally or vertically. The moisture movements of a vertical-grain parquet were eliminated to the level of 1%o with the total amount of 500 g aluminium mesh per 1 m².

The base layer 4 can also be conventionally constituted by pieces of wood. In this case, it is preferred that the diamond- or parallelogram-shaped apertures 2 of the meshed aluminium plate 1 be aligned in such a manner that the aperture 2 has its longer diameter crosswise relative to the direction of the wood grains of the base layer. Since the meshed aluminium plate has a higher tensile strength in the direction of the longer diameter of an aperture than in the direction of the shorter diameter, the choice of a mesh direction compensates for the lower strength and higher dimensional instability of the base layer in the direction crosswise to the wood grains.

The base layer 4 is preferably constituted by a fiber-reinforced mineral board since its dimensional variations as a result of moisture changes are minimal, the meshed aluminium plate 1 being thus capable of more easily retaining the dimensional stability of the surface layer 3.

In the case of fig. 1, a bottom layer 5 is also made of wood and bonded to the base layer 4 with an adhesive joint 7, which is reinforced with the meshed aluminium plate 1. Thus, the element of fig. 1 has a symmetrical laminated structure.

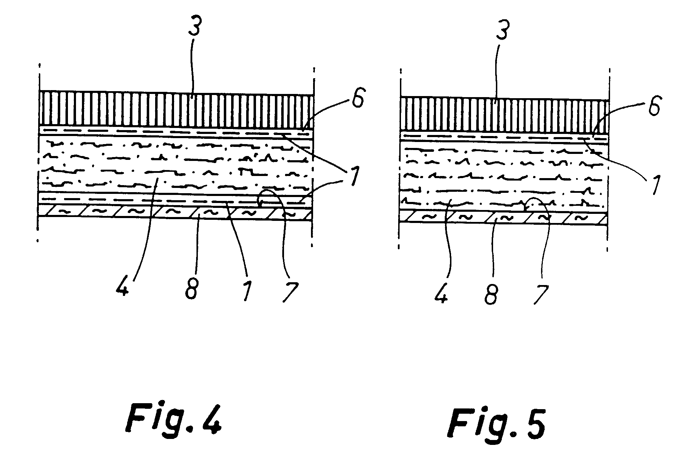

Fig. 4 depicts a parquet element which differs from the case of fig. 1 only in that a bottom layer 8 comprises a sheet of cardboard, more preferably solid board than corru gated board. This has made it possible to increase the thickness of the base layer 4 and, respectively, to increase the strength and rigidity of the element.

If the material of the base board 4 has a good dimensional stability in terms of moisture changes, the embodiment of fig. 4 does not require a lower meshed aluminium plate 1. In this case, the parquet element has a structure as shown in fig. 5, wherein the cardboard 8 is sized with an adhesive joint 7 directly to the bottom surface of the base board 4. The use of the cardboard 8 as the bottom surface of an element offers a number of advantages. It is an expensive material and easy to handle in the manufacturing process of elements. In use, it provides a ventilating gap between the foundation and the parquet.

Fig. 3 illustrates implements for attaching elements to each other by the edges thereof. The base layer 4 has its lateral edges provided with holes 9 or short recesses 11 for receiving pins 10 or oblong discs 12 bonding the elements together. This serves to bring the element surfaces to flush with each other while avoiding a continuous tongue-and-groove joint, which complicates installation and slows the drying of a parquet foundation.

The adhesive in an adhesive joint including the meshed plate 1 is preferably supplemented by adding therein a reagent, which promotes foaming of the adhesive. The adhesive's low inclination to foaming reduces the consumption of adhesive. An equivalent result is achieved by supplementing the adhesive with extenders, such as e.g. micropellets of glass.

The selection of adhesive can now be made according to the requirements of a product. Strong and moisture-resistant joints are obtained by using reaction adhesives, such as uethane, epoxy, phenolic, urea formaldehyde, and polyester adhesives. It is also possible to employ standard water-diluted timber glues.

In case the adhesive joint is required to have a controlled penetration of moisture, it is best achieved by choosing a suitable adhesive. The meshed plate 1 assists in producing an adhesive joint of uniform thickness. The use of aluminium or aluminium alloys as a mesh material is preferred for being resistant to corrosion and readily workable. Aluminium is also particularly suitable whenever the product will still be worked subsequent to sizing or glueing. Aluminium is well suitable for cutting-edge angles used for wood and it does not dull hard metal tools. For special purposes it is possible to employ suitable aluminium alloys.

The number of apertures in an employed meshed plate may cover from 20 % to 80 % of the total area and the plate may have a thickness within the range of 0,1 - 2 mm. However, the number of apertures preferably covers more than 50 % of the total area of a meshed plate for achieving in most applications an optimum condition in terms of both the strength and dimensional stability of an adhesive joint. The meshed plate may have a square-meter weight within the range of 0,2 - 2 kg/m² and typically about 0,5 kg/m².

## Claims

1. A laminated parquet element, comprising at least three distinct layers (3, 4, 5; 3, 4, 8), one being a base layer (4) and another a wooden surface layer (3) which is bonded to the base layer by an adhesive joint (6), **characterized** in that said adhesive joint (6) is reinforced with a meshed aluminium plate (1).

2. A parquet element as set forth in claim 1, **characterized** in that the adhesive comdprises an urethane, epoxy, phenolic, urea formaldehyde or polyester adhesive, which filles mesh apertures (2) in the meshed aluminium plate (1).

3. A parquet element as set forth in claim 1 or 2, **characterized** in that the adhesive is supplemented by adding therein a reagent for foaming the adhesive, or the adhesive is supplemented by adding therein an extender for reducing the consumption of adhesive.

4. A parquet element as set forth in any of claims 1-3, **characterized** in that the base layer (4) comprises a fiber-reinforced mineral board.

5. A parquet element as set forth in any of claims 1-4, **characterized** in that a bottom layer (5, 8) is bonded to the base layer (4) with an adhesive joint (7), which is reinforced with the meshed aluminium plate (1).

6. A parquet element as set forth in any of claims 1-5, **characterized** in that the bottom layer (8) comprises a sheet of cardboard.

7. A parquet element as set forth in any of claims 1-6, **characterized** in that the number of apertures in the meshed aluminium plate (1) covers from 20 % to 80 % of its total area, most preferably more than 50 % of the total area of the meshed aluminum plate.

8. A parquet element as set forth in any of claims 1-7, **characterized** in that the surface layer (3) has the wood grains extending vertically or in a direction substantially divergent from horizontal, the parquet surface being constituted by the severed ends of the grains.

9. A parquet element as set forth in any of claims 1-8, **characterized** in that the base layer (4) has its lateral edges provided with holes (9) or short recesses (11) for receiving pins (10) or oblong discs (12) bonding the parquet elements together.

10. A parquet element as set forth in any of claims 1-9, **characterized** in that the apertures (2) of the meshed aluminium plate (1) are in the shape of a diamond or a parallelogram, said meshed aluminium plate having a different tensile strength in different directions.
